(19) Europäisches Patentamt

European Patent Office

Office européen des brevets

(11) **EP 0 927 467 B1**

(12) **EUROPEAN PATENT SPECIFICATION**

(45) Date of publication and mention
of the grant of the patent:
**14.12.2005 Bulletin 2005/50**

(51) Int Cl.7: **H04B 3/23**, H04B 3/03,
H04M 11/06

(21) Application number: **97942050.2**

(22) Date of filing: **22.09.1997**

(86) International application number:
**PCT/FI1997/000566**

(87) International publication number:
**WO 1998/012824 (26.03.1998 Gazette 1998/12)**

(54) **Circuit configuration for adapting a multispeed modem to a line and adaptation method thereof**

Schaltungskonfiguration zur Anpassung eines Mehrgeschwindigkeits-Modems zu einer Leitung und
die entsprechende Anpassungsmethode

Configuration de circuit pour adapter un modem multivitesse à la ligne et le procédé d'adaption
correspondant

(84) Designated Contracting States:
**DE ES FR GB IT NL SE**

(30) Priority: **23.09.1996 FI 963791**

(43) Date of publication of application:
**07.07.1999 Bulletin 1999/27**

(73) Proprietor: **Tellabs Oy**
**02630 Espoo (FI)**

(72) Inventor: **LAAMANEN, Heikki**
**FIN-02230 Espoo (FI)**

(74) Representative: **Lipsanen, Jari Seppo Einari et al**
**Seppo Laine Oy,**
**Itämerenkatu 3 B**
**00180 Helsinki (FI)**

(56) References cited:
EP-A- 0 691 771       US-A- 4 888 762
US-A- 5 204 854       US-A- 5 222 084
US-A- 5 371 789

**Description**

The present invention relates to a circuit configuration according to the preamble of claim 1 for adapting an echo-cancelling modem to a line.

The invention also concerns a modem adaptation method.

Conventionally, a modem is connected to a line via a transformer which isolates the line galvanically from the modem and serves as an overvoltage protection against transients imposed on the modem from the line. The transformer inductance of an echo-cancelling modem must be held within certain limits in order to keep the number of weighting coefficients of the digital echo-cancelling circuit sufficiently small as evaluated against to the implementation costs of the echo canceller, and on the other hand, to prevent the transformer from imposing excessive distortion on received signal, thus deteriorating the function of the modem receiver circuitry. In the prior art, adjustment of the transformer inductance has been problematic in multispeed modems, wherein the selection of an optimal inductance for each data transfer speed has required the use of, e.g., multiwinding transformers as well as relay or switch control circuits thereof.

EP 0 961 771 describes a hybrid circuit for coupling a modem to an external telephone line compensating for and canceling reflected echo.

It is an object of the present invention to overcome the drawbacks of the above-described technique and to provide an entirely novel type of circuit configuration for adapting an echo-cancelling modem to a line.

The goal of the invention is achieved by providing with the help of an integrator in front of the transformer a feedback circuit in which, by virtue of a controlled time constant, the line transformer inductance can be adjusted dynamically according to the instantaneous data transfer speed using, e.g., a simple switched resistor matrix.

More specifically, the circuit configuration according to the invention is characterized by what is stated in the characterizing part of claim 1.

Furthermore, the method according to the invention is characterized by what is stated in the characterizing part of claim 8.

The invention offers significant benefits.

The digital circuit section associated with echo cancellation can be fabricated at a lower cost. The transformer matching circuit is realized without expensive multiwinding transformers and relay circuits required for their switching arrangements that are both costly and prone to malfunction.

In the following, the invention will be examined in greater detail with the help of exemplifying embodiments illustrated in the appended drawings in which

Figure 1 shows the block diagram of a circuit configuration according to the prior art;

Figure 2 shows the block diagram of a circuit configuration according to the invention;

Figure 3 shows a detail of the circuitry of Fig. 2; and

Figure 4 shows an alternative implementation of the circuit detail of Fig- 2.

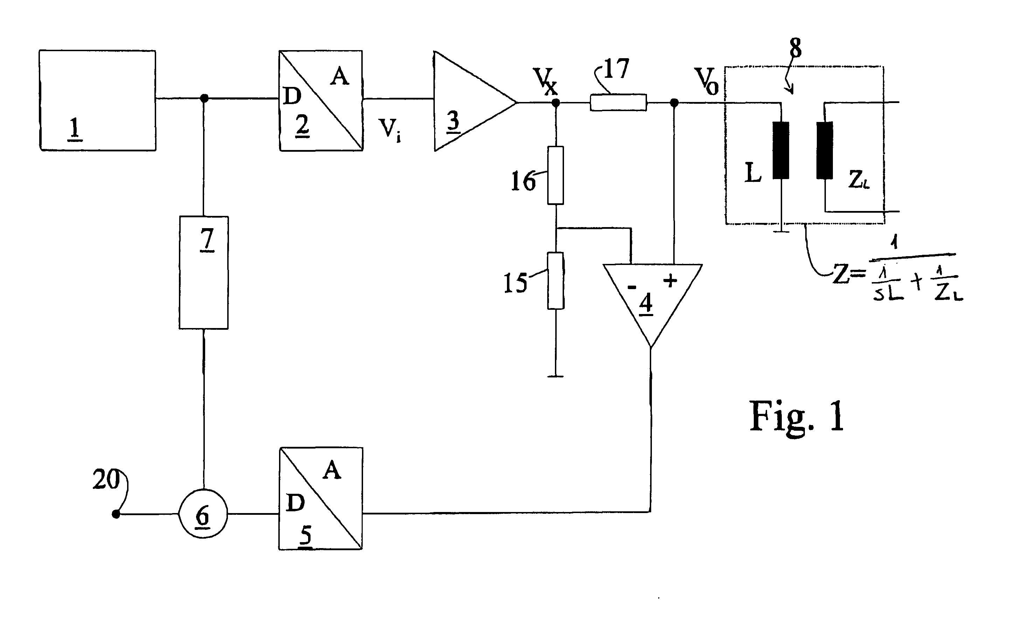

Referring to Fig. 1, conventionally the signal from the transmitter 1 of an echo-cancelling multispeed modem is taken to a digital/analog converter 2, after which the analog output signal is buffered by a buffer amplifier 3, called the transmitter buffer. The circuitry, which comprises an isolation amplifier 4, impedances 15, 16 and 17 as well as the impedance

$$Z = \frac{1}{\frac{1}{sL} + \frac{1}{Z_L}}$$

formed by the transformer 8 and the line, perform in an echo-cancelling modem as a conventionally used hybrid circuit which cancels a portion of the reflected echo of the transmit signal (s denotes the variable of Laplace transform). The hybrid acts as a Wheatstone bridge, where the impedance 16 connected at its one end to the transmitter buffer 3 and the impedance 15 connected between the first impedance and the ground form the other branch of the bridge, while the impedance 17 connected at its one end to the transmitter buffer 3 and the impedance

$$\frac{1}{\frac{1}{sL} + \frac{1}{Z_L}}$$

formed together by the transformer 8 and the line perform as the other branch of the bridge. The impedance 17 connected between the transmitter buffer 3 and the transformer 8 may also be called the line drive impedance. The hybrid attenuates the transmit signal echo the better the closer the impedance 15 is the resultant impedance of the transformer and the line, that is, the parallel connected impedance

$$\frac{1}{\frac{1}{sL} + \frac{1}{Z_L}}$$

of the main impedance L of the transformer 8 and the line impedance $Z_L$. Both the receive signal and the residual transmit signal echo are taken from the amplifier 4 for digitization to the analog/digital converter 5. While the above-described hybrid configuration is representative to a conventional embodiment, other circuit embodiments implementing the transfer function corresponding to the bridge branch formed by the impedances 15 and 16 may be contemplated without compromising performance of the invention.

As the parallel-connected impedance

$$\frac{1}{(\frac{1}{sL} + \frac{1}{Z_L})}$$

of the transformer 8 and the line form one of the bridge impedances, the magnitude of the inductance L of the transformer 8 has such an effect on the transmit signal echo that if the transformer inductance is too high, the duration of the echo path impulse response (echo tail) increases from a normal situation, whereby efficient echo cancellation requires a greater number of weighting coefficients in the adaptive echo cancellation circuit, resulting a higher component cost. In the case that the transformer inductance L is too small, the transformer imposes distortion on the receive signal from the line, thereby deteriorating the function of the receiver.

The digitized signal is taken to a summing point 6, where it is summed for echo cancellation with the inverted signal taken from the transmitter 1 via an adaptive FIR filter. Thus, a signal component processed by the filter 7 is subtracted from the receive signal in order to cancel the transmit signal echo, whereby the output 20 of the summing stage 6 delivers the echo-free modem output signal.

By denoting the resistance 17 with symbol R for the sake of simplicity, the transfer function of a circuit configuration according to the prior art can be computed from the diagram of Fig. 1:

$$\frac{V_o}{V_i} = \frac{\left(\dfrac{1}{\frac{1}{sL} + \frac{1}{Z_L}}\right)}{R + \dfrac{1}{\frac{1}{sL} + \frac{1}{Z_L}}} = \frac{1}{1 + \dfrac{R}{\frac{1}{\frac{1}{sL} + \frac{1}{Z_L}}}} = \frac{1}{1 + R(\frac{1}{sL} + \frac{1}{Z_L})} \qquad (1)$$

This equation may further be written:

$$\frac{V_o}{V_i} = \frac{s}{s(1+\frac{R}{Z_L}) + \frac{R}{L}} \tag{2}$$

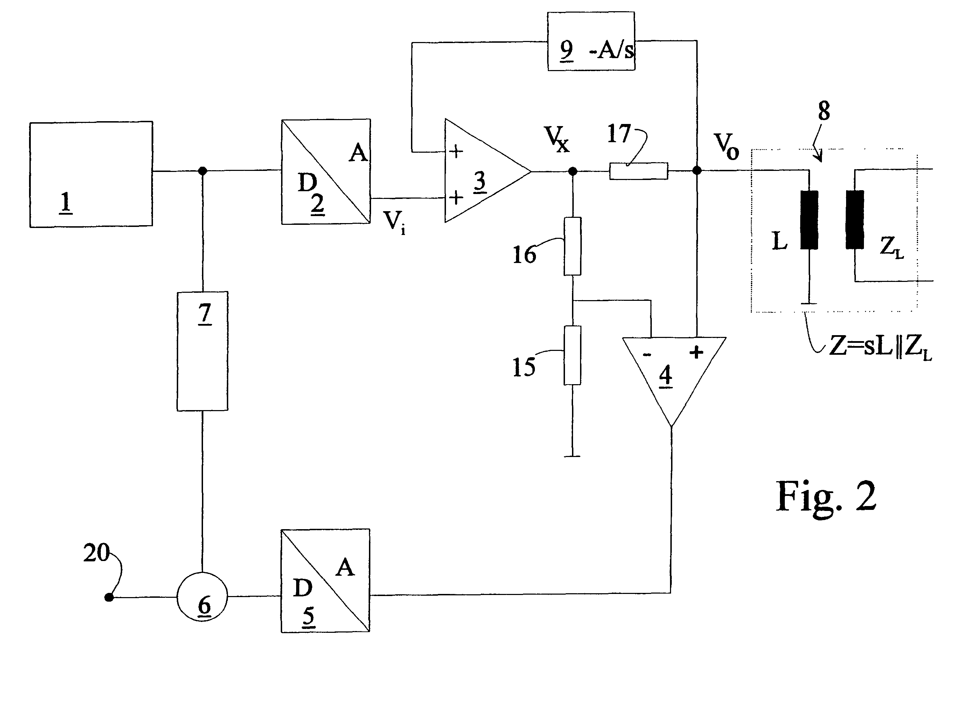

In the circuit configuration according to the invention illustrated in Fig. 2, the feedback path is formed by means of an integrator 9 from the connection point of the line drive impedance 17 and the primary winding of the transformer 8 to the input of the transmitter buffer 3.

As the integrator 9 represents a term -A/s, the transfer function of the circuit configuration according to the invention comprising the integrator 9 may be written from

$$V_x = V_i - \frac{A}{s} \cdot V_o \tag{3}$$

point $V_x$ to point $V_o$ as follows:

$$V_o = \frac{Z}{R+Z} \cdot V_x = \frac{Z}{R+Z} [V_i - \frac{A}{s} \cdot V_o] \tag{4}$$

This equation may further be rewritten:

$$(1+\frac{A}{s} \cdot \frac{Z}{R+Z})V_o = \frac{Z}{R+Z} \cdot V_i \tag{5}$$

Rewriting the equation gives:

$$\frac{V_o}{V_i} = \frac{\frac{Z}{R+Z}}{1+\frac{A}{s} \cdot \frac{Z}{R+Z}} = \frac{sZ}{s(R+Z)+AZ} \tag{6}$$

which may be further rewritten as:

When the resultant impedance Z is divided into a parallel connection of the transformer impedance L and the line impedance $Z_L$ in the following manner:

$$\frac{1}{Z} = \frac{1}{sL} + \frac{1}{Z_L} \tag{7}$$

which the transfer function can be written as:

$$\frac{V_o}{V_i} = \frac{s}{s(1+\frac{R}{Z})+A} = \frac{s}{s(1+\frac{R}{sL}+\frac{R}{Z_L})+A} \tag{8}$$

which may further be rewritten as:

$$\frac{V_o}{V_i} = \frac{s}{s(1+\frac{R}{Z_L})+\frac{R}{L}+A} \tag{9}$$

A comparison of the transfer functions represented by

$$\frac{V_o}{V_i} = \frac{s}{s(1+\frac{R}{Z_L})+\frac{R}{L}\bullet(1+\frac{AL}{R})} \tag{10}$$

Eqs. 2 and 9 reveals that Eq. 9 can be rewritten as: Here, the transformer inductance is seen to be virtually reduced to a value of:

$$L \rightarrow \frac{L}{1+A\bullet\frac{L}{R}} \tag{11}$$

obviously, the coefficient A of the integrator 9 can be used for controlling said inductance.

The integrator 9 can be implemented in a plurality of alternative methods either using a continuous-signal operational amplifier or a discrete-signal filter known in the art as the "switched-capacitor circuit", whereby the coefficient A may be easily adjusted.

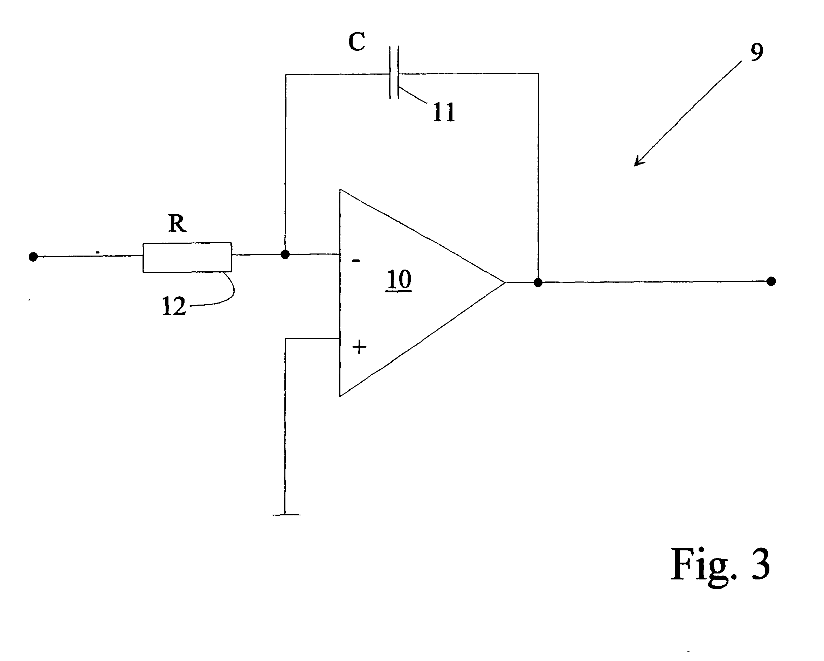

In Fig. 3 is shown a continuous-signal operational amplifier configuration, in which the time constant RC is the inverse of the coefficient A. Hence, the circuit 9 of Fig. 3 comprises an operational amplifier 10 having its output terminal connected via a capacitor 11 to the inverting input of the operational amplifier 10. A resistor 12 with a capacitor 11, both connected to the inverting input terminal of the amplifier, determine the integration time constant of the integrator. Thus, said time constant is a product of said components, and therefore, the inverse of said coefficient A.

In practice, the coefficient A is adjusted by, e.g., selecting the value of the resistance 12 according to the modem data transfer speed from a resistor matrix (by means of solid-state switches, for instant). Then, the value of the capacitor 11 is kept unchanged. Alternatively, the capacitor 11 can be selectable from a switched capacitor matrix, whereby the value of the resistor 12 is kept unchanged.

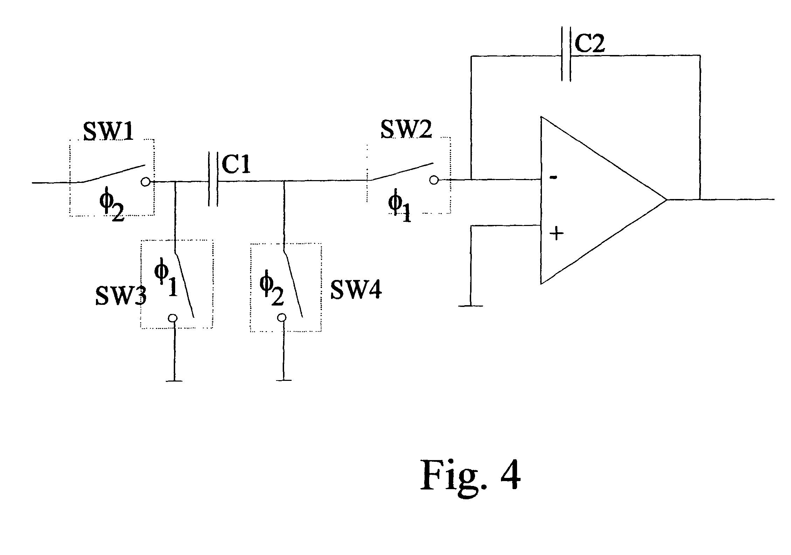

In Fig. 4 is shown an integrator embodiment implemented using the "switched-capacitor" technique, in which the value of $KC_2/C_1$ is the inverse of the coefficient A. Herein, K is a coefficient dependent on the frequency of the clocks driving the solid-state switches SW1-SW4. In the diagram, $\varphi_1$ and $\varphi_2$ denote clock signal of opposite phase that control the solid-state switches SW1-SW4. Thence, the coefficient A can be altered by either changing said clock frequency or implementing the capacitors $C_1$ and $C_2$ as a capacitor matrix controlled by solid-state switches.

## Claims

1. A circuit for adapting an echo-cancelling multispeed modem to a line, said circuit comprising

   - a transmitter (1),

   - a transmitter buffer (3) connected on the signal path of the transmitter (1),

   - a line drive resistance (17) connected to the output of the transmitter buffer (3),

   - a line transformer (8) connected to the line drive resistance (17), and

   - echo-cancelling elements (5, 6, 7) for eliminating the transmit signal echo from the receive signal,

   **characterized in that**

   - to the input of the transmitter buffer (3) is arranged a feedback path from the connection point of the line transformer (8) and the line drive resistor (17) by means of an integrator (9).

2. A circuit as defined in claim 1, **characterized in that** said integrator (9) comprises continuous-signal operational amplifier circuit having a controllable time constant (A).

3. A circuit as defined in claim 1, **characterized in that** said integrator (9) comprises discrete-signal operational amplifier circuit having a controllable time constant (A).

4. A circuit as defined in claim 2, **characterized in that** said integrator (9) further comprises a resistor or capacitor matrix controlled by solid-state switches for performing control of said time constant (A) of said integrator (9).

5. A circuit as defined in claim 2, **characterized in that** said integrator (9) includes a controllable resistor (12) for setting the time constant of said integrator.

6. A circuit defined in claim 2, **characterized in that** said integrator (9) includes a controllable capacitor (11) for setting the time constant of said integrator.

7. A circuit as defined in claim 3, **characterized in that** said integrator (9) includes a controllable capacitor ($C_1$ or $C_2$) for setting the time constant of said integrator.

8. A method of adapting an echo-cancelling multispeed modem to a line which modem comprises

   - a transmitter (1),

   - a transmitter buffer (3) connected on the signal path of the transmitter (1),

   - a line drive resistance (17) connected to the output of the transmitter buffer (3),

   - a line transformer (8) connected to the line drive resistance (17), and

   - echo-cancelling elements (5, 6, 7) for eliminating the transmit signal echo from the receive signal,

   **characterized by**

   - arranging, to the input of the transmitter buffer (3), a feedback path from the connection point of the line transformer (8) and the line drive resistor (17) by means of an integrator (9).

9. A method as defined in claim 8, **characterized by** implementing said integrator (9) by means of continuous-signal operational amplifier circuit having a controllable time constant (A).

10. A method as defined in claim 8, **characterized by** implementing said integrator (9) by means of discrete-signal operational amplifier circuit having a controllable time constant (A).

11. A method as defined in claim 9, **characterized by** setting the time constant of said integrator (9) by a controllable resistor (12).

12. A method defined in claim 11, **characterized by** selecting an electronically switched resistor matrix as a controllable resistor (12).

13. A method as defined in claim 10, **characterized by** controlling said time constant (A) by altering the clock frequency of controllable switches (SW1-SW4) of the integrator (9).

**Patentansprüche**

1. Schaltung zur Anpassung eines Mehrgeschwindigkeitsmodems mit Echokornpensation an eine Leitung, wobei die Schaltung aufweist:

   - einen Sender (1),
   - einen Senderpuffer (3), der mit dem Signalweg des Senders (1) verbunden ist,
   - einen mit dem Ausgang des Senderpuffers (3) verbundenen Leitungsansteuerungswiderstand (17),
   - einen mit dem Leitungsansteuerungswiderstand (17) verbundenen Leitungsübertrager (8) und
   - Echokompensationselemente (5, 6, 7) zum Entfernen des Sendesignalechos aus dem Empfangssignal,

   **dadurch gekennzeichnet, daß**

   - mit Hilfe eines Integrierers (9) ein Rückkopplungsweg vom Verbindungspunkt zwischen Leitungsübertrager (8) und Leitungsansteuerungswiderstand (17) zum Eingang des Senderpuffers (3) vorgesehen ist.

2. Schaltung nach Anspruch 1, **dadurch gekennzeichnet, daß** der Integrierer (9) eine Operationsverstärkerschaltung für kontinuierliche Signale mit regelbarer Zeitkonstante (A) aufweist.

3. Schaltung nach Anspruch 1, **dadurch gekennzeichnet, daß** der Integrierer (9) eine Operationsverstärkerschaltung für diskrete Signale mit regelbarer Zeitkonstante (A) aufweist.

4. Schaltung nach Anspruch 2, **dadurch gekennzeichnet, daß** der Integrierer (9) ferner eine durch Halbleiterschalter gesteuerte Widerstands- oder Kondensatormatrix zur Durchführung der Steuerung der Zeitkonstanten (A) des Integrierers (9) aufweist.

5. Schaltung nach Anspruch 2, **dadurch gekennzeichnet, daß** der Integrierer (9) einen regelbaren widerstand (12) zur Einstellung der Zeitkonstanten des Integrierers aufweist.

6. Schaltung nach Anspruch 2, **dadurch gekennzeichnet, daß** der Integrierer (9) einen regelbaren Kondensator (11) zur Einstellung der Zeitkonstanten des Integrierers aufweist.

7. Schaltung nach Anspruch 3, **dadurch gekennzeichnet, daß** der Integrierer (9) einen regelbaren Kondensator ($C_1$ oder $C_2$) zur Einstellung der Zeitkonstanten des Integrierers aufweist.

8. Verfahren zur Anpassung eines Mehrgeschwindigkeitsmodems mit Echokompensation an eine Leitung, wobei das Modem aufweist:

   - einen Sender (1),
   - einen Senderpuffer (3), der mit dem Signalweg des Senders (1) verbunden ist,
   - einen mit dem Ausgang des Senderpuffers (3) verbundenen Leitungsansteuerungswiderstand (17),
   - einen mit dem Leitungsansteuerungswiderstand (17) verbundenen Leitungsübertrager (8) und
   - Echokompensationselemente (5, 6, 7) zum Entfernen des Sendesignalechos aus dem Empfangssignal,

   **gekennzeichnet durch**:

   - Einrichten eines Rückkopplungswegs vom Verbindungspunkt zwischen Leitungsübertrager (8) und Leitungsansteuerungswiderstand (17) zum Eingang des Senderpuffers (3) mit Hilfe eines Integrierers (9).

9. Verfahren nach Anspruch 8, **gekennzeichnet durch** Implementieren des Integrierers (9) mit Hilfe der Operationsverstärkerschaltung für kontinuierliche Signale mit regelbarer Zeitkonstante (A).

10. Verfahren nach Anspruch 8, **gekennzeichnet durch** Implementieren des Integrierers (9) mit Hilfe der Operationsverstärkerschaltung für diskrete Signale mit regelbarer Zeitkonstante (A).

11. Verfahren nach Anspruch 9, **gekennzeichnet durch** Einstellen der Zeitkonstanten des Integrierers (9) **durch** einen regelbaren Widerstand (12).

12. Verfahren nach Anspruch 11, **gekennzeichnet durch** Auswahl einer elektronisch geschalteten Widerstandsmatrix als regelbarer Widerstand (12).

13. Verfahren nach Anspruch 10, **gekennzeichnet durch** Steuerung der Zeitkonstante (A) **durch** Ändern der Taktfrequenz von steuerbaren Schaltern (SW1-SW4) des Integrierers (9).


**Revendications**

1. Circuit d'adaptation d'un modem multivitesse d'annulation d'écho à une ligne, ledit circuit comprenant :

   - un émetteur (1),
   - un tampon de transmission (3) connecté sur le trajet du signal de l'émetteur (1),
   - une résistance de commande de ligne (17) connectée à la sortie du tampon de transmission (3),

- un transformateur de ligne (8) connecté à la résistance de commande de ligne (17), et
- des éléments d'annulation d'écho (5, 6, 7) destinés à éliminer l'écho de signal de transmission du signal de réception,

**caractérisé en ce que**

- vers l'entrée du tampon de l'émetteur (3) est disposée une chaîne de réaction à partir du point de connexion du transformateur de ligne (8) et de la résistance de commande de ligne (17) au moyen d'un intégrateur (9).

2. Circuit selon la revendication 1, **caractérisé en ce que** ledit intégrateur (9) comprend un circuit amplificateur opérationnel à signal continu ayant une constante de temps contrôlable (A).

3. Circuit selon la revendication 1, **caractérisé en ce que** ledit intégrateur (9) comprend un circuit amplificateur opérationnel à signal discret ayant une constante de temps contrôlable (A).

4. Circuit selon la revendication 2, **caractérisé en ce que** ledit intégrateur (9) comprend en outre une matrice de résistance ou de condensateur contrôlée par des contacteurs statiques pour exécuter le contrôle de ladite constante de temps (A) dudit intégrateur (9).

5. Circuit selon la revendication 2, **caractérisé en ce que** ledit intégrateur (9) comprend une résistance contrôlable (12) pour établir la constante de temps dudit intégrateur.

6. Circuit selon la revendication 2, **caractérisé en ce que** ledit intégrateur (9) comprend un condensateur contrôlable (11) pour établir la constante de temps dudit intégrateur.

7. Circuit selon la revendication 3, **caractérisé en ce que** ledit intégrateur (9) comprend un condensateur contrôlable ($C_1$ ou $C_2$) pour établir la constante de temps dudit intégrateur.

8. Procédé d'adaptation d'un modem multivitesse d'annulation d'écho à une ligne, lequel modem comprend

- un émetteur (1)
- un tampon de transmission (3) connecté sur le trajet du signal de l'émetteur (1),
- une résistance de commande de ligne (17) connectée à la sortie du tampon de transmission (3),
- un transformateur de ligne (8) connecté à la résistance de commande de ligne (17), et
- des éléments d'annulation d'écho (5, 6, 7) destinés à éliminer l'écho de signal de transmission du signal de réception,

**caractérisé par**

- la disposition, vers l'entrée du tampon de transmission (3), d'une chaîne de réaction depuis le point de connexion du transformateur de ligne (8) et la résistance de commande de ligne (17) au moyen d'un intégrateur (9).

9. Procédé selon la revendication 8, **caractérisé par** l'implémentation dudit intégrateur (9) au moyen du circuit amplificateur opérationnel à signal continu ayant une constante de temps contrôlable (A).

10. Procédé selon la revendication 8, **caractérisé par** l'implémentation dudit intégrateur (9) au moyen d'un circuit amplificateur opérationnel à signal discret ayant une constante de temps contrôlable (A).

11. Procédé selon la revendication 9, **caractérisé par** l'établissement de la constante de temps dudit intégrateur (9) par une résistance contrôlable (12).

12. Procédé selon la revendication 11, **caractérisé par** la sélection d'une matrice de résistance commutée électroniquement en tant que résistance contrôlable (12).

13. Procédé selon la revendication 10, **caractérisé par** le contrôle de ladite constante de temps (A) en modifiant la fréquence d'horloge des commutateurs contrôlables (SW1-SW4) de l'intégrateur (9).

Fig. 1

Fig. 2

$Z = sL \| Z_L$

EP 0 927 467 B1

Fig. 3

Fig. 4